# EUROPÄISCHE PATENTSCHRIFT

(11) **EP 0 600 400 B1**
(45) Veröffentlichungstag und Bekanntmachung des Hinweises auf die Patenterteilung: **23.10.1996**
(21) Anmeldenummer: 93119153.0
(22) Anmeldetag: 27.11.1993
(51) Int. Cl.: F16H 61/02, F16H 63/42

(54) **Verfahren und Vorrichtung zur Ermittlung eines günstigen Gangs**
Method and device for determining an advantageous gear speed
Méthode et dispositif pour la détermination d'un rapport de vitesse avantageux

(30) Priorität: 01.12.1992 DE 4240258
(43) Veröffentlichungstag der Anmeldung: 08.06.1994
(73) Patentinhaber: IFT INGENIEURGESELLSCHAFT FÜR FAHRZEUGTECHNIK mbH, D-73575 Leinzell (DE)
(72) Erfinder: Schwelberger, Walter, Dr., D-73527 Schwäbisch Gmünd (DE); König, Günter, D-73572 Heuchlingen (DE); Gersmann, Karl-Heinz, D-73527 Täferrot-Tierhaupten (DE)
(74) Vertreter: Patentanwälte Ruff, Beier, Schöndorf und Mütschele

(56) Entgegenhaltungen:
- EP-A- 0 312 801
- EP-A- 0 474 401
- EP-A- 0 531 567
- EP-A- 0 532 365
- WO-A-85/01256
- DE-A- 3 314 800
- DE-A- 4 006 451
- US-A- 4 622 637
- PATENT ABSTRACTS OF JAPAN vol. 009, no. 038 (M-358) 19. Februar 1985 & JP-A-59 180 046 (HINO)
- PATENT ABSTRACTS OF JAPAN vol. 016, no. 036 (M-1205) 29. Januar 1992 & JP-A-03 244 867 (FUJI)

## Beschreibung

Die Erfindung betrifft ein Verfahren und eine Vorrichtung zur Ermittlung und Anzeige eines zu wählenden Gangs in einem Kraftfahrzeug.

Es ist allgemein bekannt, daß der Verbrauch eines Kraftfahrzeugs an Brennstoff bei konstanter Geschwindigkeit niedriger ist, wenn man den nächst höheren Gang wählt. Aus diesem Grunde haben moderne Personen-Kraftfahrzeuge meistens ein 5-Gang-Getriebe. Auch bei Automatikgetrieben sind 4-Gang-Getriebe inzwischen üblich. Die Verringerung des Kraftstoffverbrauchs durch Einlegen eines höheren Gangs, d.h. durch Verwendung einer längeren Übersetzung, wirkt aber nicht in allen Drehzahl- und Lastbereichen. Es ist ohne weiteres verständlich, daß ein Kraftfahrzeug an einer Steigung beispielsweise im fünften Gang bei 60 km/h und Vollgas mehr Kraftstoff braucht als im vierten Gang, bei dem der Fahrer mit weniger Gas auskommen würde.

Es ist jedoch selbst für geübte Fahrer schwierig, in einer speziellen Fahrsituation zu entscheiden, welcher der Gänge der günstigere sein würde. Es sind zwar Verbrauchskennfelder für Kraftfahrzeuge bekannt, und es ist ebenfalls bekannt, daß der Kraftstoffverbrauch für eine bestimmte Strecke von den Fahrwiderständen abhängig ist, die sich aus verschiedenen Anteilen zusammensetzen. So ist es auch einleuchtend, daß der Fahrwiderstand von der Steigung der Straße oder der gewünschten Beschleunigung abhängt.

Es ist bereits eine Steuereinheit für ein Kraftfahrzeug bekannt (EP-A-474 401), mit dessen Hilfe der Kraftstoffverbrauch und/oder das Abgasverhalten durch Anzeige eines auszuwählenden Gangs optimiert werden kann. Zu diesem Zweck enthält die bekannte Vorrichtung für jeden zu optimierenden Wert eine experimentell ermittelte Funktion, die die Abhängigkeit des Werts von der Drehzahl und der Last enthält.

Es ist bereits eine Einrichtung zur Überwachung des Kraftstoffverbrauchs für Kraftfahrzeuge mit Schaltgetrieben bekannt (DE-C1-31 45 687), die aus einer Verarbeitung von fahrzeugspezifischen Kenndaten sowie von Kraftstoffverbrauchs- und Betriebszustandsdaten ein mit dem Momentanverbrauch des Fahrzeuges korreliertes Ausgangssignal erzeugt. Diese Einrichtung wendet sich speziell an Nutzfahrzeuge mit einer hohen Anzahl von Schaltstufen, bei denen in mehreren Schaltstufen die gleiche Vortriebsleistung mit unterschiedlicher Kraftstoffausnutzung erzielt werden kann. Dem Fahrer soll eine Entscheidungshilfe gegeben werden, wann er den Gang wechseln soll.

In einer groben Vereinfachung ist auch das Abgasverhalten vom Kraftstoffverbrauch abhängig. Je höher der Verbrauch ist, desto höher ist auch die Abgasemission. Es gibt aber dennoch deutliche Unterschiede zwischen dem Abgasverhalten und dem Kraftstoffverbrauch. Es ist daher mit der bekannten Einrichtung nicht möglich, den Fahrer des Nutzfahrzeugs, für das die Einrichtung gedacht ist, zu einem emissionsgünstigen Verhalten anzuleiten.

Das Problem eines möglichst geringen Abgasausstoßes wird sich in Zukunft aufgrund gesetzlicher Vorschriften noch verschärfen.

Der Erfindung liegt die Aufgabe zugrunde, dem Fahrer eines Kraftfahrzeugs eine Anzeige zur Verfügung zu stellen, die ihm in jeder Fahrtsituation eine Anzeige liefern kann, ob er zur Optimierung des Abgasverhaltens den Gang wechseln soll oder nicht.

Zur Lösung dieser Aufgabe schlägt die Erfindung eine Vorrichtung mit den Merkmalen des Anspruchs 1 sowie ein Verfahren mit den Merkmalen des Anspruchs 10 vor. Weiterbildungen sind Gegenstand der jeweiligen Unteransprüche.

Die Vorrichtung nach der Erfindung ermittelt also für jeden Fahrzustand bei einer von dem Fahrer vorgegebenen Geschwindigkeit denjenigen Gang, der am günstigsten ist. Sie zeigt diesen Gang dem Fahrer an, wobei es im Normalfall ausreichen kann, wenn die Anzeige so erfolgt, daß der Fahrer aufgefordert wird, einen Gang höher oder tiefer zu schalten. Es ist selbstverständlich auch denkbar und möglich, daß der empfohlene Gang direkt durch eine Zahl angezeigt wird. Was hier für die Gänge eines Schaltgetriebes ausgeführt wird, gilt selbstverständlich auch für die Fahrstufen eines Automatikgetriebes, da Automatikgetriebe normalerweise auf andere Werte optimiert sind, da sie den Schlupf des Getriebes mit berücksichtigen müssen. Insbesondere ist die Erfindung sinnvoll bei Lastkraftwagen oder Nutzfahrzeugen, die eine sehr große Zahl von Gängen haben, so daß der Fahrer noch weniger in der Lage ist, für eine gegebene Fahrsituation den günstigsten Gang herauszufinden.

In Weiterbildung der Erfindung kann vorgesehen sein, daß die Vorrichtung einen mit der Logikeinrichtung verbundenen Neigungsmesser zur Berücksichtigung einer Änderung der Fahrtwiderstandskurve aufgrund von Steigungen und/oder Beschleunigungen aufweist. Ein Neigungsmesser beispielsweise in Form eines Pendels kann im Prinzip nicht unterscheiden, ob die Veränderung des Pendels aufgrund einer Beschleunigung oder aufgrund einer Steigung erfolgt. Die Auswirkung auf die Fahrtwiderstandskurve ist aber in beiden Fällen im wesentlichen gleich. Die Änderung der Fahrtwiderstandslinie aufgrund einer Steigung oder Beschleunigung wirkt sich auf die Fahrtwiderstandslinien aller Gänge bzw. Getriebeübersetzungen gleich aus, so daß die Logikeinheit nach der Erfindung aufgrund der Korrektur der Fahrtwiderstandslinie des gerade eingelegten Gangs auch die Fahrtwiderstandslinien der anderen Gänge korrigieren kann und auf diese Weise die korrigierten Fahrtwiderstandslinien für die Ermittlung des günstigsten Gangs berücksichtigen kann.

In nochmaliger Weiterbildung der Erfindung kann vorgesehen sein, daß die Vorrichtung eine Feststelleinrichtung zur Feststellung der augenblicklichen Stellung des Gaspedals und eine Vergleichseinrichtung in der Logikeinheit aufweist, die die augenblickliche Stellung des Gaspedals mit einem der Normal-fahrtwiderstandslinie entsprechenden Wert vergleicht und aus dem Vergleich eine der augenblicklichen Fahrsituation entsprechende Fahrtwiderstandslinie ermittelt, die für den Vergleich verwendet wird. Hiermit wird die Möglichkeit angesprochen, daß das Kraftfahrzeug mit einer bestimmten Stellung des Gaspedals mit einer konstanten Geschwindigkeit fährt, obwohl nach dem abgespeicherten Wert der Fahrtwiderstandslinie die Geschwindigkeit bzw. Drehzahl größer oder kleiner sein müßte. Dies kann beispielsweise bedeuten, daß das Fahrzeug eine Steigung hinauf- bzw. hinabfährt. Ähnliches gilt auch für die sonstigen gemessenen Werte, also den Unterdruck im Ansaugrohr, den Luftdurchsatz oder dergleichen.

Da die Logikeinrichtung der Vorrichtung ihre Berechnungen in regelmäßig wiederkehrenden Abständen durchführt, kann auch eine Tendenz ermittelt werden, ob sich dabei die Geschwindigkeit bzw. Drehzahl ändert. Es wird aber auch der Fall berücksichtigt, daß weder eine Steigung noch eine Beschleunigung vorliegt, sondern daß sich gegenüber dem Normalzustand des Fahrzeugs einer der Fahrtwiderstände erhöht hat, beispielsweise der Luftwiderstand. Dies kann zum Beispiel durch einen Dachträger verursacht sein. Gerade in einem solchen Fall ist es für den Fahrer wichtig, eine Anzeige zur Auswahl des günstigsten Gangs zu erhalten, da hier seine gesamte Erfahrung versagt, wenn er nur selten mit dem Dachträger fährt.

Ein weiterer hierdurch berücksichtigter Fall ist das Fahren mit Anhänger, da sich hier sowohl der Luftwiderstand als auch der Rollwiderstand vergrößern.

In Weiterbildung der Erfindung kann vorgesehen sein, daß die Logikeinheit einen Speicher für die Abspeicherung der gemessenen Werte von Drehzahl, Stellung des Gaspedals, eingelegtem Gang und Unterdruck an mindestens einem vor dem augenblicklichen Zustand liegenden Zeitpunkt aufweist. Hiermit kann die Logikeinheit sowohl Änderungen einzelner Meßwerte als auch Kombinationen von Änderungen mehrerer Meßwerte registrieren und bei der Ermittlung des günstigsten Wertes berücksichtigen.

Insbesondere kann die Logikeinheit aus dem Vergleich zwischen zwei gemessenen Drehzahlen und zwei gemessenen Stellungen des Gaspedals auf eine Beschleunigung und/oder Verzögerung schließen und diese bei der Ermittlung der korrigierten Fahrtwiderstandslinien berücksichtigen.

Die Erfindung schlägt vor, ein Abgaskennfeld getrennt für die unterschiedlichen Abgaskomponenten zu verwenden. Beispielsweise kann die Erfindung, wenn ein CO₂-Ausstoß verringert werden soll, ein CO₂-Abgaskennfeld verwenden. Natürlich müssen die Kennfelder auch in diesem Fall für jeden Motortyp einzeln erstellt werden.

Bekannt sind ebenfalls Kraftfahrzeuge mit einem Hybrid-Antrieb, bei denen dann, wenn eine geringe Leistung verwendet wird, mit einem Elektromotor als Antrieb gefahren wird, während sich bei höheren Leistungen ein Verbrennungsmotor zuschaltet. Auch hier kann die Erfindung dem Fahrer helfen, indem sie ihn auffordert, einen anderen Gang zu wählen. Bei einem derartigen Hybrid-Antrieb könnte ein falscher Gang in einer bestimmten Situation dazu führen, daß der Verbrennungsmotor eingeschaltet bleibt, obwohl dies eigentlich nicht mehr erforderlich ist.

Bei dem von der Erfindung vorgeschlagenen Verfahren, das im Anspruch 10 beschrieben ist, wird vorzugsweise ebenfalls die augenblickliche Drehzahl und die augenblickliche Stellung des Gaspedals und der eingelegte Gang erfaßt und abgespeichert und nach einem bestimmten zeitlichen oder zurückgelegten Abstand mit den augenblicklich gemessenen Werten verglichen, wobei diese dann nach dem Vergleich wiederum abgespeichert werden.

Weitere Merkmale, Einzelheiten und Vorzüge der Erfindung ergeben sich aus den Patentansprüchen, deren Wortlaut zum Inhalt der Beschreibung gemacht wird, der folgenden Beschreibung einer bevorzugten Ausführungsform der Erfindung sowie anhand der Zeichnung. Hierbei zeigen:
- Fig. 1: schematisch ein Motorabgaskennfeld;
- Fig. 2: schematisch eine Vorrichtung nach der Erfindung.

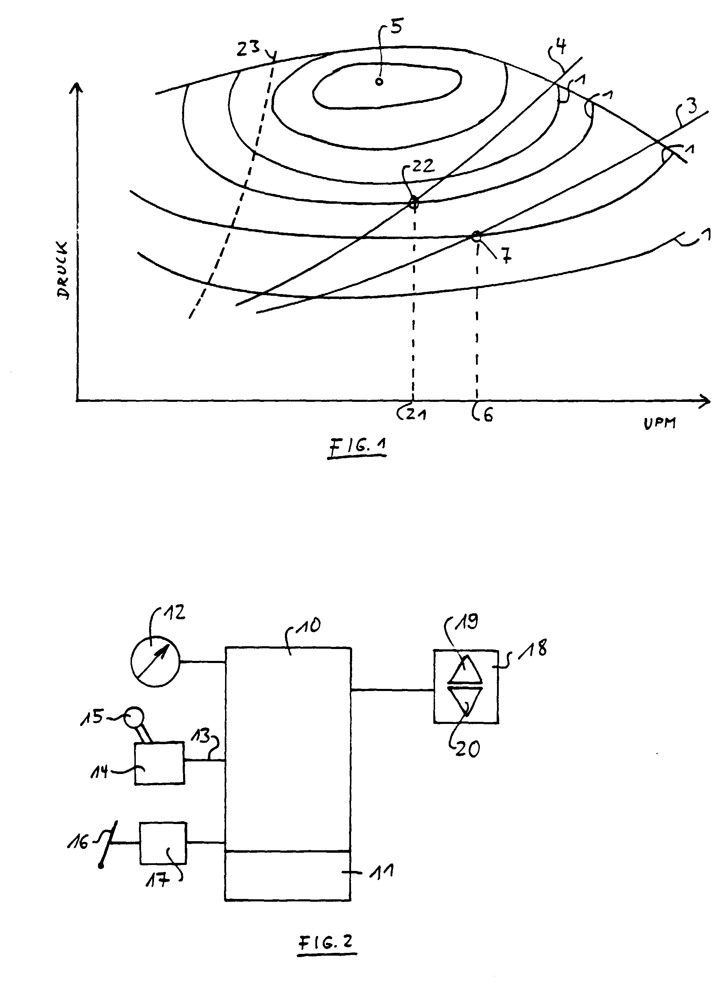

In dem Diagramm der Fig. 1 ist auf der Abszisse die Motordrehzahl eines Verbrennungsmotors aufgetragen, während die Ordinate den effektiven Mitteldruck im Brennraum des Verbrennungsmotors darstellt. In dem Diagramm sind Linien 1 konstanten spezifischer Abgasemission eingezeichnet, bei denen es sich im Prinzip um Scharen geschlossener Kurven handelt. Einseitig sind diese jedoch durch eine Linie 2 begrenzt, die den Volllastverlauf des Motors darstellt. Eine größere Leistung als dieser Vollastlinie 2 entsprechend kann der Motor nicht leisten.

In dieses Kennlinienfeld sind zwei Fahrtwiderstandslinien eingezeichnet, nämlich eine Fahrtwiderstandslinie 3 für den dritten Gang und eine Fahrtwiderstandslinie 4 für den vierten Gang.

Die Kurven konstanter Abgasemission sind so zu verstehen, daß die Emission am günstigsten ist, je näher die Linie dem Gipfel 5 des Kurvenscharenberges kommt.

Die beiden Fahrtwiderstandslinien 3 und 4 entsprechen dem Fahrtwiderstand auf ebener Straße mit konstanter Geschwindigkeit bzw. Drehzahl.

Das Diagramm der Fig. 1 ist folgendermaßen zu lesen. Fährt ein Kraftfahrzeug bei einer bestimmten Drehzahl im dritten Gang mit konstanter Geschwindigkeit auf ebener Strecke, so bringt man die konstante Drehzahl, beispielsweise die Drehzahl 6 in Fig. 1, zum Schnitt mit der diesem Gang bzw. dieser Getriebeübersetzung entsprechenden Fahrtwiderstandskurve 3. Dieser Schnittpunkt 7 stellt dar, in welchem Zustand sich das Kraftfahrzeug zu diesem Zeitpunkt gerade aufhält. Der Punkt soll im folgenden als Aufenthaltspunkt des Fahrzustands bezeichnet werden. Selbstverständlich liegt dieser Aufenthaltspunkt 7 auf irgendeiner Höhenlinie, die jetzt seine spezifische Abgasemission normiert auf die maximal mögliche günstigste Emission entsprechend dem Gipfelpunkt 5 darstellt.

Fig. 2 zeigt stark vereinfacht eine Ausführungsform der von der Erfindung vorgeschlagenen Vorrichtung. Diese enthält zunächst eine Logikeinheit 10, die direkt mit einem elektronischen Speicher 11 verbunden ist. Angeschlossen an die Logikeinheit ist ein Drehzahlmesser 12, bei dem es sich entweder um einen eigenen Drehzahlmesser handelt oder um einen Anschluß an einen bereits vorhandenen Drehzahlmesser handeln kann. Die Logikeinheit kann aufgrund des Drehzahlmessers 12 also die augenblicklich vorhandene Drehzahl des Motors feststellen.

Die Logikeinheit ist weiterhin über eine Leitung 13 mit einer Abtasteinrichtung 14 verbunden, die die Fahrstufe oder den eingelegten Gang des Getriebes feststellt. Dies ist in der Figur durch den Schalthebel 15 angedeutet.

Auch die Stellung des Gaspedals 16 kann mit Hilfe einer Feststelleinrichtung 17 festgestellt werden, die mit der Logikeinheit 10 verbunden ist.

In dem mit der Logikeinheit 10 verbundenen Speicher ist das Kennfeld des Verbrennungsmotors beispielsweise in Form von Tabellen oder Feldern abgespeichert. Ebenfalls sind zusätzlich die Fahrtwiderstandslinien für eine Fahrt mit gleichmäßiger Geschwindigkeit auf ebener Strecke, die im folgenden Normal-Fahrtwiderstandslinien genannt werden sollen, abgespeichert. Dies Abspeicherung kann für alle Vorwärtsgänge erfolgen.

Die momentan gültige Fahrtwiderstandslinie wird aus den vorliegenden Daten (Drehzahl, Drehzahländerung, Motorleistung, evtl. Beschleunigungs- / Neigungssensor ...) bestimmt und für die unterschiedlichen Gänge mit Hilfe einer im Speicher abgelegten Tabelle mit den Getriebeübersetzungen der Gänge hochgerechnet.

Mit der Logikeinheit 10 verbunden ist eine Anzeigeeinrichtung 18, die den Fahrer darauf aufmerksam machen soll, daß er den Gang wechseln soll und in welchen Gang er schalten soll. Beispielsweise kann die Anzeigeeinrichtung 18 ein nach oben gerichtetes und ein nach unten gerichtetes Dreieck aufweisen. Leuchtet das Dreieck 19 mit der nach oben gerichteten Spitze auf, so bedeutet dies, daß die von der Erfindung vorgeschlagene Vorrichtung dem Fahrer empfiehlt, in seiner augenblicklichen Fahrsituation einen Gang höher zu schalten. Entsprechend bedeutet das Aufleuchten des Dreiecks 20 mit der nach unten gerichteten Spitze, daß er einen Gang zurückschalten soll. Leuchtet kein Dreieck auf, so gibt die Vorrichtung die Empfehlung, in dem Gang zu bleiben.

Es ist auch denkbar, daß die Anzeigeeinrichtung direkt eine Weiterschalteinrichtung für ein automatisches Getriebe beeinflußt.

Die von der Erfindung vorgeschlagene Vorrichtung arbeitet nun beispielsweise folgendermaßen. Es soll angenommen werden, daß ein Kraftfahrzeug mit der Drehzahl 6 mit konstanter Geschwindigkeit auf ebener Strecke fährt. Die Vorrichtung überprüft nun in regelmäßig wiederkehrenden Abständen, auf welchem Punkt 7 in dem Kennfeld sich das Fahrzeug gerade befindet. Diesen Punkt ermittelt die Vorrichtung aus der Drehzahl und der Fahrtwiderstandslinie für den gerade eingelegten Gang, siehe das Diagramm der Fig. 1. Nachdem sie diesen Aufenthaltspunkt oder relativen Emissionswert ermittelt hat, rechnet nun die Logik um, welche Drehzahl der Motor haben würde, wenn die gleiche Geschwindigkeit im vierten Gang gefahren würde. Hierbei kommt sie beispielsweise zu dem Wert 21 in Fig. 1. Die Logik ermittelt nun in der gleichen Weise wie vorher den Aufenthaltspunkt im Kennlinienfeld bei dem vierten Gang. Dieser Punkt 22 liegt natürlich ebenfalls wieder auf einer Emissionshöhenlinie, die im dargestellten Beispiel eine günstigere Emission signalisiert. Die Logikeinheit läßt nun das Dreieck 19 mit der nach oben gerichteten Spitze in der Anzeigeeinrichtung 18 aufleuchten. Dieser Vorgang des Vergleichens wird ständig wiederholt.

Die Fahrtwiderstandslinien 3, 4 für alle vorhandenen Gänge können auch als Zuordnungen zwischen einer bestimmten Stellung des Gaspedals 16 und einer Drehzahl aufgefaßt werden. Stellt die Logikeinheit fest, daß das Gaspedal 16 zum Erreichen einer konstanten Drehzahl stärker durchgetreten ist als dies dem abgespeicherten Wert entspricht, so schließt sie daraus, daß das Fahrzeug entweder mit konstanter Geschwindigkeit eine Steigung bergauf fährt oder daß sich der Luftwiderstand beispielsweise durch einen Dachgepäckträger oder der Rollwiderstand durch einen Anhänger vergrößert hat. Aufgrund dieses Unterschiedes korrigiert nun die Logikeinheit die Fahrtwiderstandslinie für den gerade eingelegten Gang. Da sich die Steigung oder die Vergrößerung des Fahrtwiderstandes aber auf die Fahrtwiderstandslinien der anderen Gänge in gleicher Weise auswirkt, korrigiert die Logikeinheit gleichzeitig auch die Fahrtwiderstandslinien der anderen Gänge. Der Vergleich zur Ermittlung des günstigsten Wertes geschieht dann mit Hilfe der korrigierten Widerstandslinien. Ein Beispiel für eine Widerstandslinie bei einer Steigung ist gestrichelt bei 23 angedeutet.

Stellt die Logikeinheit fest, daß bei einer konstanten Stellung des Gaspedals 16 die Drehzahl größer ist als dies der Fahrtwiderstandslinie entsprechen würde, so liegt ein Gefälle vor.

Beschleunigungen und nur durch den Motor bewirkte Verzögerungen können unter Berücksichtigung der Stellung des Gaspedals und der Änderung der Drehzahl von der Logikeinheit ebenfalls erkannt und berücksichtigt werden. Zu diesem Zweck kann der Speicher 11 zusätzlich Speicherplätze zur Speicherung der gemessenen Werte von Drehzahl und Stellung des Gaspedals enthalten.

Wird die von der Erfindung vorgeschlagene Vorrichtung zum Auslösen des Schaltens eines automatischen Getriebes verwendet, so kann die letztgenannte Möglichkeit auch dazu verwendet werden, beim Einleiten einer Beschleunigung ein Getriebe zurückzuschalten. In diesem Fall kann nämlich das Beschleunigen durch die Änderung der Stellung des Gaspedals 16 auch dann erkannt werden, wenn das Gaspedal nicht bis zum Anschlag durchgedrückt wird, wie dies bei den derzeit üblichen automatischen Getrieben zur Auslösung des Kickdowns erforderlich ist.

Die optische Gangwechselanzeige kann im übrigen auch dann verwendet werden, wenn in Zukunft automatische Verkehrsüberwachungs-Leitsysteme direkt in ein Kraftfahrzeug eingreifen können, um den Fahrer auf Geschwindigkeitsbegrenzungen oder ähnliches aufmerksam zu machen. In diesem Fall würde der Fahrer beispielsweise von der Vorrichtung zum Herunterschalten aufgefordert. Wenn er erkennt, daß ihn die Vorrichtung eigentlich in unsinniger Weise zum Herunterschalten auffordert, so kann er daraus ableiten, daß eine besondere Situation vorliegt, die ihn zu besonderem Verhalten auffordert.

Die Erfindung schlägt vor, bei einem Verbrennungsmotor beispielsweise sowohl Verbrauchskennfelder als auch Abgaskennfelder für CO₂ und/oder HC und/oder für Stickoxide gleichzeitig einzubauen bzw. abzuspeichern und dem Fahrer die Möglichkeit zu geben, selbst auszuwählen, nach welchen Kriterien er die Anzeige optimieren möchte.

Aus Gründen der Vereinfachung wurde die Erfindung bislang so beschrieben, daß nur ein einziges Kennlinienfeld berücksichtigt wird, und daß zur Ermittlung des augenblicklichen Fahrzustandes nur die Drehzahl, die Stellung des Gashebels und der eingelegte Gang berücksichtigt wurden. Unter Gashebel ist dabei auch das Betätigungsgestänge bei Dieselmotoren zu verstehen.

Anstelle der Stellung des Gaspedals oder auch zusätzlich kann auch der Unterdruck im Ansaugrohr und/oder der Luftdurchsatz für der Verbrennungsvorgang gemessen werden. Solche Daten liegen in den bislang bekannten elektronischen Motorsteuerungen zum Teil schon vor, so daß die Logikeinheit 10 nach der Erfindung diese dort vorhandenen Meßwerte direkt abfragen und bei der Auswertung berücksichtigen kann.

Bei der Berücksichtigung mehrerer Kennlinienfelder kann im einfachsten Fall zur Ermittlung des Anzeigewertes eine Aufsummierung der Werte für den jeweils nächst höheren oder nächst niedrigeren Gang durchgeführt werden. Besonders sinnvoll ist es aber, die Möglichkeit vorzusehen, den verschiedenen Abgaskennlinienfeldern Gewichtungsfaktoren zuzuordnen, so daß bei der Ermittlung des günstigsten Wertes eine Gewichtung der einzelnen Abgaskomponenten erfolgen kann. Diese Gewichtung kann ggf. auch veränderbar sein, beispielsweise durch Austauschen von Elementen. Es ist auf diese Weise möglich, sich ändernde gesetzliche Vorschriften für die einzelnen Abgaskomponenten zu berücksichtigen. Insbesondere kann erfindungsgemäß vorgesehen sein, daß die Gewichtung von weiteren Parametern abhängig sein kann.

Es ist mit der Erfindung denkbar, zusätzlich zu den Abgaskennlinienfeldern auch noch Kennlinienfelder für den Verbrauch vorzusehen. Es könnte in Einzelfällen der Fall auftreten, daß in zwei verschiedenen Gängen bei einem bestimmten Fahrzustand das Abgasverhalten das gleiche, der Kraftstoffverbrauch aber ungleich ist.

Die Logikeinheit ist auch in der Lage, einen bestimmten Leistungsspielraum für den empfohlenen Gang zu berücksichtigen. Ebenfalls kann, je nach ermittelter Fahrsituation, eine mehr oder weniger große Leistungsreserve als Bedingung zur Bestimmung des optimalen Gangs berücksichtigt werden.

## Patentansprüche

1. Vorrichtung zur Anzeige eines zu wählenden Gangs in einem Kraftfahrzeug, mit einem Drehzahlmesser (12) oder einem Anschluß für einen Drehzahlmesser (12), einer Abtasteinrichtung (14) zur Feststellung des augenblicklich eingelegten Gangs, einem elektronischen Speicher (11) für ein Motorkennfeld des Abgasverhaltens und die Abstufungen des Getriebes sowie einer Logikeinheit (10), die mit dem Drehzahlmesser (12), der Abtasteinrichtung (14) und dem Speicher (11) verbunden ist, den augenblicklichen Aufenthaltspunkt im Kennlinienfeld ermittelt, aus den Getriebeabstufungen die Drehzahl für die gleiche Geschwindigkeit in dem jeweils nächst höheren und/oder nächst niedrigeren Gang ermittelt, den Aufenthaltspunkt für den jeweils nächst höheren und/oder nächst niedrigeren Gang ermittelt, den ermittelten Aufenthaltspunkt (22) mit dem bisherigen Aufenthaltspunkt (7) vergleicht und die Anzeigeeinrichtung (18) betätigt, wenn der ermittelte Aufenthaltspunkt (22) günstiger ist, dadurch gekennzeichnet, daß die Vorrichtung eine Anzeigeeinrichtung (18) zur Anzeige des zu wählenden Gangs aufweist und in dem elektronischen Speicher (11) je eine Normal-Fahrtwiderstandslinie (3, 4) für jeden Gang abgelegt ist und die Logikeinheit (10) aus dem aktuellen Fahrzustand den augenblicklichen Aufenthaltspunkt im Kennlinienfeld und den Aufenthaltspunkt im Kennlinienfeld für den jeweils nächst höheren und/oder nächst niedrigeren Gang aus der Drehzahl und der auf diese Weise ermittelten augenblicklichen Fahrtwiderstandslinie ermittelt.

2. Vorrichtung nach Anspruch 1, mit einem mit der Logikeinheit (10) verbundenen Neigungsmesser zur Berücksichtigung einer Änderung der Fahrtwiderstandslinie aufgrund einer Steigung und/oder einer Beschleunigung.

3. Vorrichtung nach Anspruch 1 oder 2, mit einer Feststelleinrichtung (17) zur Feststellung der augenblicklichen Stellung des Gaspedals (16) und einer Vergleichseinrichtung in der Logikeinheit (10), die die augenblickliche Stellung des Gaspedals (16) mit einem der Normal-Fahrtwiderstandslinie (3, 4) entsprechenden Wert vergleicht und aus dem Vergleich eine der augenblicklichen Fahrtsituation entsprechende korrigierte Fahrtwiderstandslinie (23) ermittelt oder aus den vorliegenden Daten errechnet und die korrigierte Fahrtwiderstandslinie (23) für die Ermittlung des günstigsten Gangs verwendet.

4. Vorrichtung nach einem der vorhergehenden Ansprüche, mit einer mit der Logikeinheit (10) verbundenen Meßeinrichtung für den Unterdruck im Ansaugrohr und/oder den Luftdurchsatz zur Ermittlung des augenblicklichen Aufenthalts im Kennlinienfeld.

5. Vorrichtung nach einem der vorhergehenden Ansprüche, bei der die Logikeinheit (10) einen Speicher (11) für die Abspeicherung der gemessenen Werte von Drehzahl und/oder Stellung des Gaspedals (16) und/oder Neigung und/oder Luftdurchsatz und/oder Unterdruck an mindestens einem Zeitpunkt aufweist.

6. Vorrichtung nach Anspruch 5, bei der die Logikeinrichtung (10) aus dem Vergleich zweier gemessener Werte auf eine Beschleunigung und/oder Verzögerung schließt und diese bei der Ermittlung der Fahrtwiderstandslinie berücksichtigt.

7. Vorrichtung nach einem der vorhergehenden Ansprüche, mit einer Einrichtung zur Berücksichtigung mehrerer Abgaskennlinienfelder.

8. Vorrichtung nach Anspruch 7, mit einer Einrichtung zum Gewichten der mehreren Abgaskennlinienfelder.

9. Vorrichtung nach einem der vorhergehenden Ansprüche, mit einem Abgaskennlinienfeld für CO₂ und/oder CO und/oder HC und/oder NOₓ.

10. Verfahren zur Ermittlung eines zu wählenden Gangs in einem Kraftfahrzeug mit einem Getriebe, bei dem der augenblickliche Aufenthaltspunkt (7) in einem Kennlinienfeld für das Abgasverhalten ermittelt wird, aus den Getriebeabstufungen die der gleichen Geschwindigkeit entsprechende Drehzahl für den nächst höheren und/oder nächst niedrigeren Gang ermittelt wird, für den nächst höheren und/oder nächst niedrigeren Gang der Aufenthaltspunkt in dem Kennlinienfeld ermittelt wird und der ermittelte Aufenthaltspunkt (22) mit dem augenblicklich vorhandenen Aufenthaltspunkt (7) im Kennlinienfeld verglichen wird, dadurch gekennzeichnet, daß der augenblickliche Aufenthaltspunkt in dem Kennlinienfeld und der Aufenthaltspunkt in dem Kennlinienfeld für den nächst höheren und/oder nächst niedrigeren Gang aus dem ermittelten Fahrzustand und der dadurch errechneten Fahrtwiderstandslinie ermittelt und der dem ermittelten Aufenthaltspunkt (22) entsprechende Gang angezeigt wird, wenn der ermittelte Aufenthaltspunkt (22) günstiger ist.

11. Verfahren nach Anspruch 10, bei dem der augenblickliche Fahrzustand aus der Drehzahl und/oder der Stellung des Gaspedals und/oder dem Luftdurchsatz und/oder dem Unterdruck und/oder den Daten einer elektronischen Motorsteuerung ermittelt wird.

12. Verfahren nach Anspruch 10 oder 11, bei dem die augenblickliche Drehzahl und/oder die augenblickliche Stellung des Gaspedals (16) und/oder der Luftdurchsatz gemessen und abgespeichert werden und die Messungen in regelmäßigen Abständen wiederholt werden.

13. Verfahren nach einem der Ansprüche 11 bis 12, bei dem mindestens zwei nacheinander gemessene Drehzahlen verglichen und aus dem Vergleich auf eine Beschleunigung bzw. Verzögerung geschlossen wird.

14. Verfahren nach einem der Ansprüche 11 bis 13, bei dem mindestens zwei nacheinander gemessene Stellungen des Gaspedals (16) verglichen werden.

15. Verfahren nach einem der Ansprüche 11 bis 14, bei dem mindestens zwei nacheinander erfolgte Messungen des Luftdurchsatzes miteinander verglichen werden.

16. Verfahren nach einem der Ansprüche 10 bis 15, bei dem der günstigere Aufenthaltspunkt für mehrere Kennlinienfelder ermittelt wird.

17. Verfahren nach Anspruch 16, bei dem mehrere Kennlinienfelder unterschiedlich stark bewertet werden.

18. Verfahren nach einem der Ansprüche 10 bis 17, bei dem Kennlinienfelder für CO₂ und/oder CO und/oder HC und/oder NOₓ verwendet werden.

## Claims

1. Device for indicating a gear to be chosen in a motor vehicle, with a revolution counter (12) or a connection for a revolution counter (12), a scanning device (14) for locating the instantaneously engaged gear, an electronic memory (11) for an engine performance chart of the exhaust behaviour and the gear steps, as well as a logic unit (10), which is connected to the revolution counter (12), the scanning device (14) and the memory (11), which determines the instantaneous position in the performance chart, determines from the gear steps the revs for the same speed in the in each case next higher and/or next lower gear, determines the position for the in each case next higher and/or next lower gear, compares the determined position (22) with the previous position (7) and operates the indicator (18) if the determined position (22) is more favourable, characterized in that the device has an indicator (18) indicating the gear to be chosen and in the electronic memory (11) is filed a normal running resistance line (3, 4) for each gear and the logic unit (10) determines from the actual driving state the instantaneous position in the performance chart and the position in the performance chart for the in each case next higher and/or next lower gear from the revs and the instantaneous running resistance line determined in this way.

2. Device according to claim 1, with an inclinometer connected to the logic unit (10) for taking account of a change in the running resistance line due to a gradient and/or an acceleration.

3. Device according to claim 1 or 2, with a locating device (17) for locating the instantaneous position of the accelerator pedal (16) and a comparator in the logic unit (10), which compares the instantaneous position of the accelerator pedal (16) with a value corresponding to the normal running resistance line (3, 4) and determines from the comparison a corrected running resistance line (23) corresponding to the instantaneous travel situation or calculates same from the existing data and uses the corrected running resistance line (23) for determining the most favourable gear.

4. Device according to one of the preceding claims with a measuring device, connected to the logic unit (10), for the vacuum in the induction manifold and/or the air flow rate for determining the instantaneous position in the performance chart.

5. Device according to one of the preceding claims, in which the logic unit (10) has a memory (11) for storing the measured values of the revs and/or the position of the accelerator pedal (16) and/or the inclination and/or the air flow rate and/or vacuum at at least one time.

6. Device according to claim 5, in which the logic device (10) on the basis of the comparison of two measured values draws a conclusion regarding the acceleration and/or deceleration and takes account of this when determining the running resistance line.

7. Device according to one of the preceding claims with a mechanism for taking account of several exhaust performance charts.

8. Device according to claim 7 with a mechanism for weighting several exhaust performance charts.

9. Device according to one of the preceding claims with an exhaust performance chart for CO₂ and/or CO and/or HC and/or NOₓ.

10. Method for determining a gear to be chosen in a motor vehicle with a gear, in which the instantaneous position (7) in a performance chart for the exhaust behaviour is determined, from the gear steps is determined the revs corresponding to the same speed for the next higher and/or next lower gear, for the next higher and/or next lower gear the position in the performance chart is determined and the determined position (22) is compared with the instantaneously present position (7) in the performance chart, characterized in that the instantaneous position in the performance chart and the position in the performance chart for the next higher and/or next lower gear is determined from the established travel state and the thus calculated running resistance line and the gear corresponding to the determined position (22) is indicated if the determined position (22) is more favourable.

11. Method according to claim 10, in which the instantaneous travel state is determined from the revs and/or the position of the accelerator pedal and/or the air flow rate and/or the vacuum and/or the data of an electronic timing gear.

12. Method according to claim 10 or 11, in which the instantaneous revs and/or the instantaneous position of the accelerator pedal (16) and/or the air flow rate are measured and stored and the measurements are repeated at regular intervals.

13. Method according to one of the claims 11 to 12, in which at least two successively measured revs are compared and from the comparison a conclusion concerning acceleration or deceleration is drawn.

14. Method according to one of the claims 11 to 13, in which at least two successively measured positions of the accelerator pedal (16) are compared.

15. Method according to one of the claims 11 to 14, in which at least two successively performed measurements of the air flow rate are compared.

16. Method according to one of the claims 10 to 15, in which the more favourable position for several performance charts is determined.

17. Method according to claim 16, in which several performance charts are given different weightings.

18. Method according to one of the claims 10 to 17, in which performance charts for CO₂ and/or C0 and/or HC and/or NOₓ are used.

## Revendications

1. Dispositif pour indiquer un rapport de vitesse à sélectionner dans un véhicule automobile, avec un tachymètre (12) ou un branchement pour un tachymètre (12), un dispositif de balayage (14) pour déterminer le rapport momentanément enclenché, une mémoire électronique (11) pour un diagramme caractéristique du comportement d'échappement du moteur et pour les gradations de la transmission, et avec une unité logique (10) qui est reliée au tachymètre (12), au dispositif de balayage (14) et à la mémoire (11), détermine le point momentané de situation dans le diagramme caractéristique, détermine d'après les gradations de la transmission le régime nécessaire pour obtenir la même vitesse dans le rapport respectif immédiatement supérieur et/ou immédiatement inférieur, détermine le point de situation pour le rapport respectif immédiatement supérieur et/ou immédiatement inférieur, compare le point de situation déterminé (22) au point de situation actuel (7), et actionne le dispositif indicateur (18) si le point de situation déterminé (22) est plus avantageux, **caractérisé** en ce que le dispositif présente un dispositif indicateur (18) pour indiquer le rapport de vitesse à sélectionner, une courbe normale de résistance à l'avancement (3, 4) est déposée pour chaque rapport dans la mémoire électronique (11), et l'unité logique (10) détermine, à partir de la situation actuelle de conduite, le point de situation momentané dans le diagramme caractéristique, et détermine le point de situation dans le diagramme caractéristique pour le rapport respectif immédiatement supérieur et/ou immédiatement inférieur à partir du régime et de la courbe momentanée de résistance à l'avancement ainsi déterminée.

2. Dispositif selon la revendication 1, avec un clinomètre, relié à l'unité logique (10), pour prendre en compte une modification de la courbe de résistance à l'avancement sur la base d'une pente et/ou d'une accélération.

3. Dispositif selon la revendication 1 ou 2, avec un dispositif de détermination (17) pour déterminer la position momentanée de la pédale d'accélération (16), et avec un dispositif comparateur dans l'unité logique (10), qui compare la position momentanée de la pédale d'accélération (16) à une valeur correspondant à la courbe normale de résistance à l'avancement (3, 4) et qui détermine d'après la comparaison une courbe corrigée de résistance à l'avancement (23) correspondant à la situation momentanée de conduite, ou la calcule d'après les données disponibles, et qui utilise la courbe corrigée de résistance à l'avancement (23) pour la détermination du rapport le plus avantageux.

4. Dispositif selon une des revendications précédentes, avec un dispositif, relié à l'unité logique (10), de mesure de la dépression dans le tuyau d'admission et/ou du débit d'air, afin de déterminer le point de situation momentané dans le diagramme caractéristique.

5. Dispositif selon une des revendications précédentes, selon lequel l'unité logique (10) présente une mémoire (11) pour mémoriser les valeurs, mesurées à au moins un instant, de régime et/ou de position de la pédale d'accélération (16) et/ou d'inclinaison et/ou de débit d'air et/ou de dépression.

6. Dispositif selon la revendication 5, selon lequel l'unité logique (10) conclut à une accélération et/ou une décélération d'après la comparaison de deux valeurs mesurées, et en tient compte pour la détermination de la courbe de résistance à l'avancement.

7. Dispositif selon une des revendications précédentes, avec un dispositif pour prendre en compte plusieurs diagrammes caractéristiques d'échappement.

8. Dispositif selon la revendication 7, avec un dispositif pour pondérer les diagrammes caractéristiques d'échappement.

9. Dispositif selon une des revendications précédentes, avec un diagramme caractéristique d'échappement pour le CO₂ et/ou le CO et/ou le HC et/ou les NOₓ.

10. Procédé pour la détermination d'un rapport de vitesse à sélectionner dans un véhicule automobile pourvu d'une boîte de vitesses, selon lequel on détermine le point de situation momentané (7) dans un diagramme caractéristique du comportement d'échappement, on détermine d'après les gradations de la transmission le régime correspondant à la même vitesse pour le rapport immédiatement supérieur et/ou immédiatement inférieur, on détermine le point de situation dans le diagramme caractéristique pour le rapport immédiatement supérieur et/ou immédiatement inférieur, et on compare le point de situation déterminé (22) au point de situation momentanément existant (7) dans le diagramme caractéristique, **caractérisé** en ce que le point de situation momentané dans le diagramme caractéristique et le point de situation dans le diagramme caractéristique pour le rapport immédiatement supérieur et/ou immédiatement inférieur sont déterminés d'après la situation déterminée de conduite et la courbe de résistance à l'avancement ainsi calculée, et le rapport de vitesse correspondant au point de situation déterminé (22) est indiqué au conducteur si le point de situation déterminé (22) est plus avantageux.

11. Procédé selon la revendication 10, selon lequel on détermine la situation momentanée de conduite d'après le régime et/ou la position de la pédale d'accélération et/ou le débit d'air et/ou la dépression et/ou les données d'un système électronique de commande du moteur.

12. Procédé selon la revendication 10 ou 11, selon lequel on mesure et mémorise le régime momentané et/ou la position momentanée de la pédale d'accélération (16) et/ou le débit d'air, et on répète les mesures à intervalles réguliers.

13. Procédé selon une des revendications 11 à 12, selon lequel on compare au moins deux régimes successivement mesurés, et on conclut à une accélération et/ou une décélération d'après cette comparaison.

14. Procédé selon une des revendications 11 à 13, selon lequel on compare au moins deux positions successivement mesurées de la pédale d'accélération (16).

15. Procédé selon une des revendications 11 à 14, selon lequel on compare entre elles au moins deux mesures successivement effectuées du débit d'air.

16. Procédé selon une des revendications 10 à 15, selon lequel on détermine le point de situation le plus avantageux pour plusieurs diagrammes caractéristiques.

17. Procédé selon la revendication 16, selon lequel on apprécie avec des pondérations différentes plusieurs diagrammes caractéristiques.

18. Procédé selon une des revendications 10 à 17, selon lequel on utilise des diagrammes caractéristiques pour le CO₂ et/ou le CO et/ou le HC et/ou les NOₓ.
